**Europäisches Patentamt**

**European Patent Office**

**Office européen des brevets**

(19)

(11) Veröffentlichungsnummer: **0 120 356**
**B1**

(12) # EUROPÄISCHE PATENTSCHRIFT

(45) Veröffentlichungstag der Patentschrift:
13.09.89

(51) Int. Cl.⁴: **B 65 G 51/30**

(21) Anmeldenummer: **84102414.4**

(22) Anmeldetag: **07.03.84**

(54) Empfangsstation einer Transportanlage für Probenköpfe.

(30) Priorität: **29.03.83 DE 3311360**

(43) Veröffentlichungstag der Anmeldung:
**03.10.84 Patentblatt 84/40**

(45) Bekanntmachung des Hinweises auf die Patenterteilung:
**13.09.89 Patentblatt 89/37**

(84) Benannte Vertragsstaaten:
**AT BE FR IT LU NL**

(56) Entgegenhaltungen:
**GB-A-1 173 617**
**GB-A-1 486 458**

(73) Patentinhaber: **Fried. Krupp Gesellschaft mit beschränkter Haftung, Altendorfer Strasse 103, D-4300 Essen 1 (DE)**

(72) Erfinder: **Schwarz, Wilhelm, Prof. Dr.- Ing., Zum Wolfsloch 27, D-5910 Kreuztal (DE)**

EP 0 120 356 B1

LIBER, STOCKHOLM 1989

**Beschreibung**

Die Erfindung betrifft eine Empfangsstation nach dem Oberbegriff des Anspruchs 1.

Die Einhaltung enger Qualitätsnormen bei der Metallerzeugung und -veredelung machen Messungen und Probenentnahmen noch während der Blaszeit erforderlich.

Es sind Einrichtungen zur Probenentnahme einer senkrecht bewegbaren Meßlanze bekannt, bei denen die Meßlanze zur jeweiligen Probenentnahme mit einer Probensonde versehen wird. Die Probensonde weist einen rohrförmigen, gewickelten Pappkörper auf, der an seinem einen Ende - im folgenden kurz Sondenkopf genannt - einen Keramikkörper mit Hohlräumen und einer Einlauföffnung und ggf. mit Meßelementen aufweist. Es ist ferner bekannt, den Sondenkopf nach der Probenentnahme von der übrigen Sonde zu trennen und in eine pneumatisch betätigte Transporteinrichtung zu geben.

Die bekannte Transporteinrichtung hat an ihrem einen Ende eine schrankartige Empfangsstation mit einem darin gleitbar geführten, schubladenartigen Behälter mit einem Gitterrost. Diese Empfangsstation eignet sich nur zum Aufnehmen und Entnehmen des ganzen Probenkopfes. Zur metallurgischen Untersuchung der Probe muß der Probenkopf von Hand aus dem Behälter der Empfangsstation entnommen werden und die eigentliche Probe vor der Eingabe in das Untersuchungslabor ebenfalls von Hand von dem Papprohr, der Keramik und schlackenreichen Probenteilen getrennt werden. Die Entnahme und Aufbereitung der Probensonde von Hand ist einerseits sehr zeitaufwendig, wodurch eine Korrektur der Zustandsgrößen und der Zusammensetzung der Schmelze im Prozeßgefäß aufgrund der aus der Probe gewonnenen Meßwerte erst relativ spät vorgenommen werden kann. Durch die Verzögerung korrigierender Einflußnahmen wird die Herstellung der gewünschten metallurgischen Zusammensetzung unnötig verzögert und die Wirtschaftlichkeit der Herstellung entsprechend nachteilig beeinflußt.

Der Erfindung liegt die Aufgabe zugrunde, die Empfangsstationen so zu gestalten, daß mit ihr die Zeit vom Eintreffen des Probenkopfes bis zum Eingang des eigentlichen Probenmaterials im Laborraum wesentlich verkürzt werden kann.

Diese Aufgabe wird durch die in Anspruch 1 gekennzeichneten Merkmale gelöst. Das Begrenzungsteil verhindert zunächst nur, daß der Probenkopf die Gleitbahn wieder verläßt. Mit dem Klemmwerkzeug können das Papprohr und der Keramikkörper des Probenkopfes in Einzelteile zerdrückt werden, so daß die eigentlich interessierende Probe freigelegt wird. Die im Bereich des Auswerfers liegenden Stücke des Probenkopfes können vom Auswerfer aus dem Bereich der Gleitbahn in die Transporteinrichtung eingegeben werden und damit in den Laborraum gelangen bzw. entsorgt werden. Alle genannten Teile können durch eine automatische Steuerung unmittelbar hintereinander betätigt werden, so daß die Probe ohne Verzögerung in den Laborraum gelangt.

Das Abschirmen der Transporteinrichtung bringt darüber hinaus den Vorteil, daß der Laborraum von dem beim Freilegen der Probe entstehenden Staub und Schmutz freigehalten werden kann.

Der Probenkopf wird im allgemeinen an einer bestimmten Stelle durchtrennt. Dazu ist es erforderlich, den Probenkopf mit einer Stirnseite an dem nach Anspruch 3 vorgesehenen Anschlag anzulegen. Zur Einhaltung eines bestimmten Maßes der Schnittstelle ist es erforderlich, den Probenkopf möglichst unversehrt an den Anschlag anzulegen, wozu es nach Anspruch 2 vorgesehen ist, das Begrenzungsteil mit einem Feder- und einem Dämpfungselement zu versehen.

Um den Trennvorgang genau am Hals des Probenmaterials vornehmen zu können, ist das Trennwerkzeug gemäß Anspruch 4 positioniert und ausgebildet. Der Bahnräumer nach Anspruch 5 dient dazu, die zerdrückten Einzelteile und die eigentliche Probe des Probenkopfes soweit noch erforderlich in den Bereich des Auswerfers zu bringen.

Sofern der Probenkopf durchtrennt wird, ist es erforderlich, den Probenkopf beim Trennvorgang zunächst mit mäßiger Kraft anzudrücken bzw. festzuhalten und ihn nach dem Durchtrennen mit erhöhter Kraft in einzelne Stücke zu zerdrücken, um die eigentlich interessierende Probe freizulegen. Dazu ist die Empfangsstation mit den beiden Kraftstufen nach Anspruch 1 und insbesondere nach Anspruch 6 ausgebildet.

Mit der Ausbildung der Empfangsstation nach Anspruch 7 ist es möglich, eine bequeme und staubfreie Entnahme der eigentlichen Probe im Laborraum vorzunehmen.

Ein Ausführungsbeispiel der Erfindung ist in der Zeichnung dargestellt und wird im folgenden näher beschrieben. Es zeigen:

Fig. 1     einen Probenkopf mit der zu untersuchenden Probe im Längsschnitt,

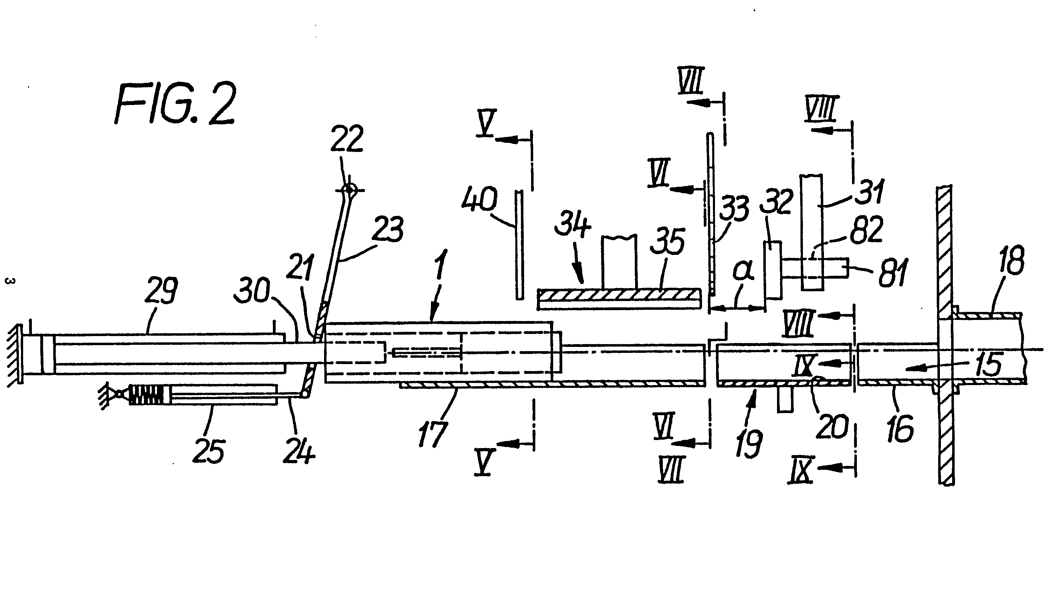

Fig. 2     die Empfangsstation beim Abbremsen eines Sondenkopfes durch das Begrenzungsteil in einem schematisierten Längsschnitt,

Fig. 3     die Empfangsstation nach Fig. 2 mit einem an den Anschlag angelegten Sondenkopf,

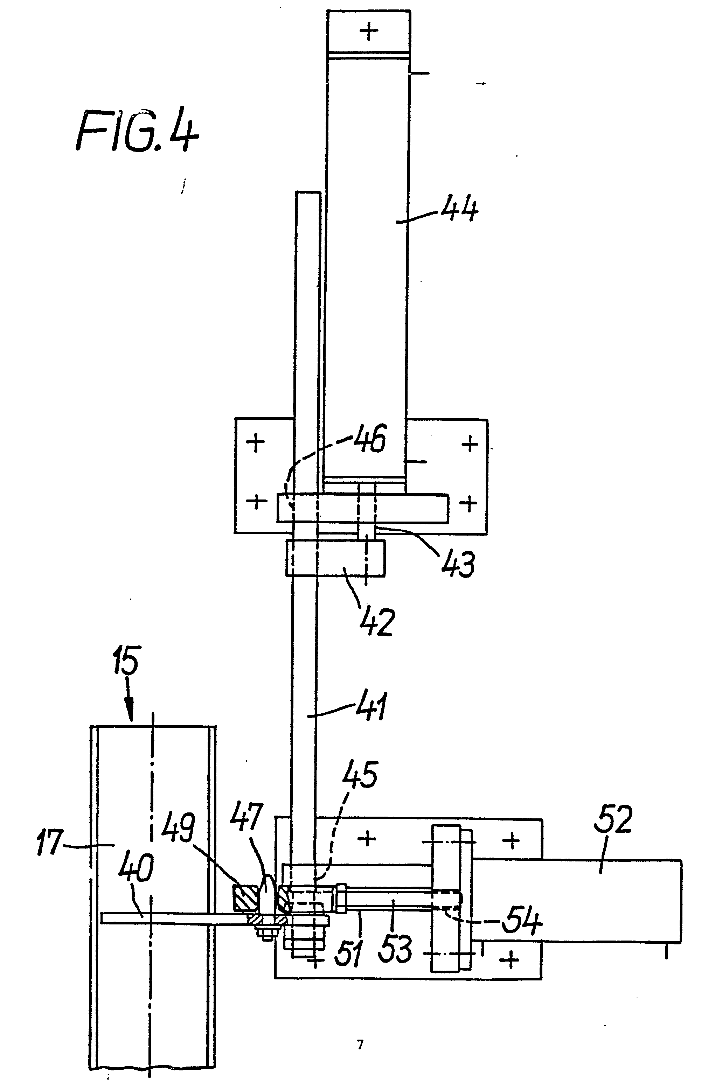

Fig. 4     den Bahnräumer mit seinen Bewegungselementen in der Draufsicht,

Fig. 5     den Bahnräumer in einem teilweisen Querschnitt längs der Linie V - V in Fig. 2,

Fig. 6     das Klemmwerkzeug mit seinen Betätigungselementen in einer weitgehend schematisierten Ansicht längs der Linie VI - VI in Fig. 2,

Fig. 7     das Trennwerkzeug in einer weitgehend schematisierten Ansicht entsprechend der Linie VII - VII in Fig. 2,

Fig. 8  der in die Gleitbahn einschwenkbare Anschlag und die entsprechenden Betätigungselemente in einem teilweisen Querschnitt längs der Linie VIII - VIII in Fig. 2,

Fig. 9  den Auswerfer mit seinen Betätigungselementen in einer teilweise schematisierten Ansicht entsprechend der Linie IX - IX in Fig. 2

Fig. 10  die aus dem Bereich des Auswerfers in den Laborraum hineinreichende Transportanlage im Längsschnitt.

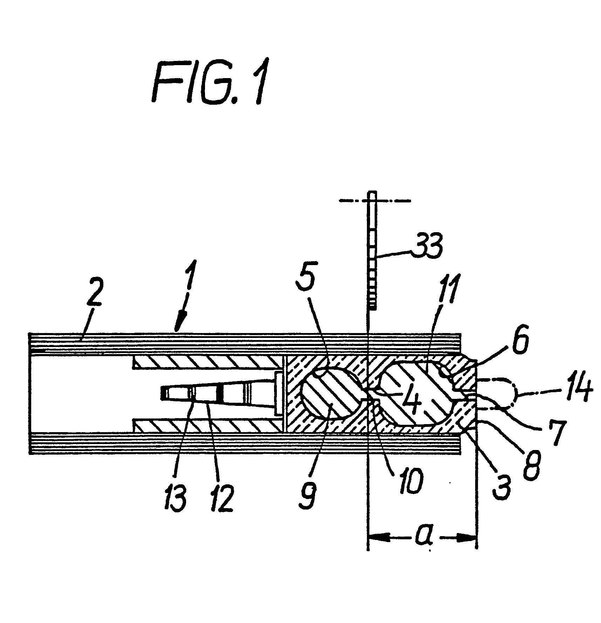

Eine typische Ausführungsform eines von einer ganzen Probensonde abgetrennten, aufzubereitenden Probenkopfes ist in Fig. 1 dargestellt. Der Sondenkopf 1 weist außen ein gewickeltes Papprohr 2 auf, in dem ein Keramikkörper 3 untergebracht ist. Der Keramikkörper 3 hat zwei durch einen Kanal 4 verbundene Hohlräume 5, 6, die durch eine Öffnung 7 mit der Außen- bzw. Stirnfläche 8 des Sondenkopfes 1 verbunden sind. Die Hohlräume 5, 6, der Kanal 4 und die Öffnung 7 sind mit dem Material der Schmelze des Prozeßgefäßes gefüllt, wobei das Material in dem von der Außenfläche 8 des Probenkopfes 1 entfernter gelegenen Hohlraum 5 die eigentliche Probe 9 darstellt, die über einen Hals 10 mit dem in dem Hohlraum 6 befindlichen Materialstück 11 verbunden ist. Zur Kupplung mit einer (nicht dargestellten) Meßlanze befindet sich im Innern des Papprohres 2 weiterhin an dem Keramikkörper 3 ein Stecker 12 mit elektrischen Kontakten 13, die beispielsweise mit einem in der Schmelze des Prozeßgefäßes verbliebenen, in Fig. 1 strichpunktiert dargestellten Thermoelement 14 verbunden sind.

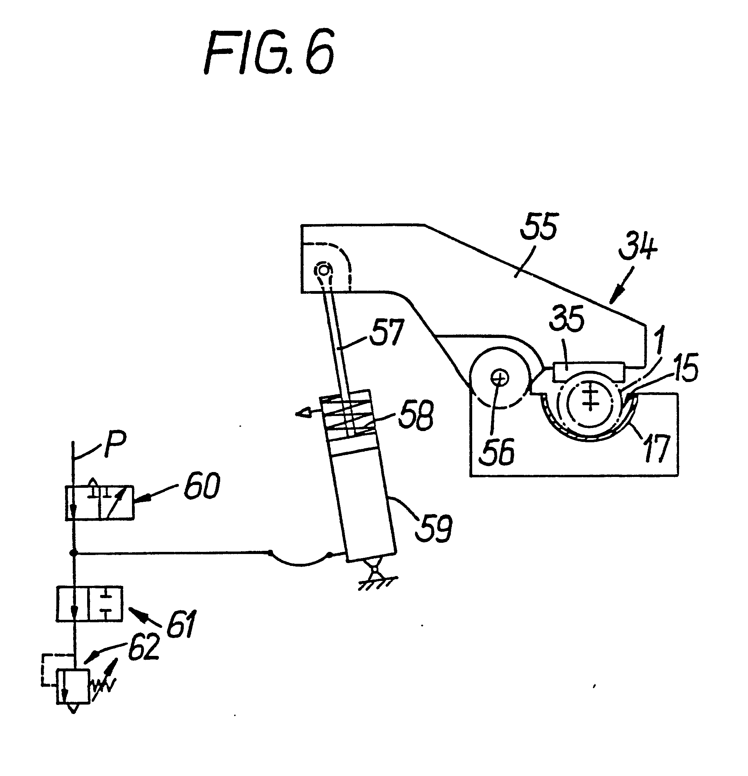

Die Empfangsstation weist eine Gleitbahn 15 mit zwei fest angeordneten Gleitbahnstücken 16, 17 auf, von denen sich das eine (16) unmittelbar an das Transportrohr 18 der (nicht weiter dargestellten) pneumatischen Transporteinrichtung anschließt. Der Querschnitt der Gleitbahnstücke 16, 17 ist im wesentlichen als Kreisringstück ausgebildet, wobei dessen Innenradius etwas größer ist als der halbe Durchmesser des Sondenkopfes 1 (vgl. Fig. 6).

Zwischen den beiden Gleitbahnstücken 16, 17 befindet sich ein Auswerfer 19, dessen Auflagefläche 20 im Querschnitt den beiden Gleitbahnstücken 16, 17 angepaßt ist.

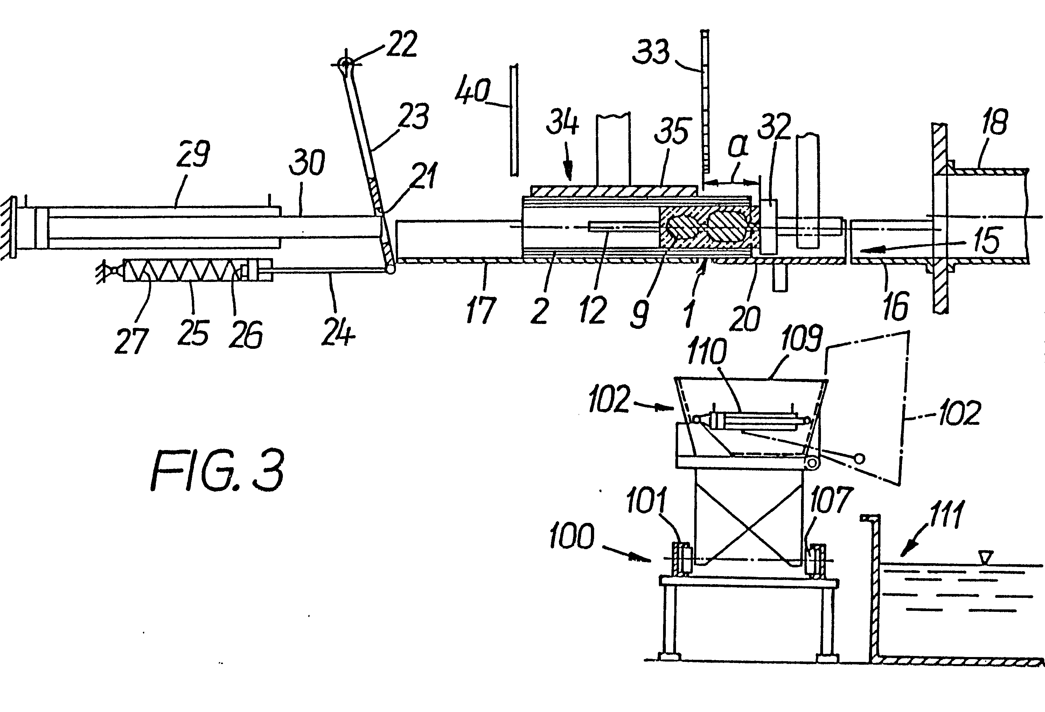

Am Ende der Gleitbahn 15 ist eine mit einem Loch 21 versehene, um eine waagerechte Achse 22 schwenkbare Blende 23 angeordnet, die an ihrem freien Ende über eine Kolbenstange 24 mit einem Zylinder 25 mit einfacher oder doppelter Dämpfung 26 verbunden ist. Die der Blende 23 abgewandte Zylinderkammer weist eine Druckfeder 27 auf, die die Blende 23 ohne weitere äußere Einflüsse in der in Fig. 3 dargestellten Lage hält. Der Durchmesser des Loches 21 der Blende 23 ist kleiner als der Außendurchmesser des Papprohres 2 des Sondenkopfes 1, so daß der Sondenkopf beim Eintreffen in die Empfangsstation von der Blende 23 gebremst wird. In Abwandlung der beschriebenen Ausführungsform kann der Zylinder auch als einfach wirkender, mit einem (nicht dargestellten) Druckbehälter verbundener Pneumatikzylinder ausgebildet sein.

Am Ende der Gleitbahn 15 befindet sich weiterhin koaxial oder zumindest achsparallel zu dieser ein Pneumatikzylinder 29 mit einer Kolbenstange 30. Der Durchmesser des Loches 21 ist größer als der Durchmesser der Kolbenstange 30, so daß diese ungehindert durch die Blende 23 hindurchtreten kann. Die Empfangsstation weist einen Hebel 31 auf, der in einer etwa über dem Auswerfer 19 befindlichen senkrechten Ebene schwenkbar ist und der an seinem freien Ende einen in axialer Richtung einstellbaren Anschlag 32 trägt. Die Empfangsstation hat ferner einen in einer senkrechten Ebene in den Bereich der Gleitbahn 15 eintauchbares Trennwerkzeug 33 sowie ein in Richtung der Gleitbahn wirksames Klemmwerkzeug 34 mit einer Klemmbacke 35 sowie einen senkrecht in den Bereich der Gleitbahn 15 einschwenkbaren Bahnräumer 40, der axial zur Gleitbahn verschiebbar ist.

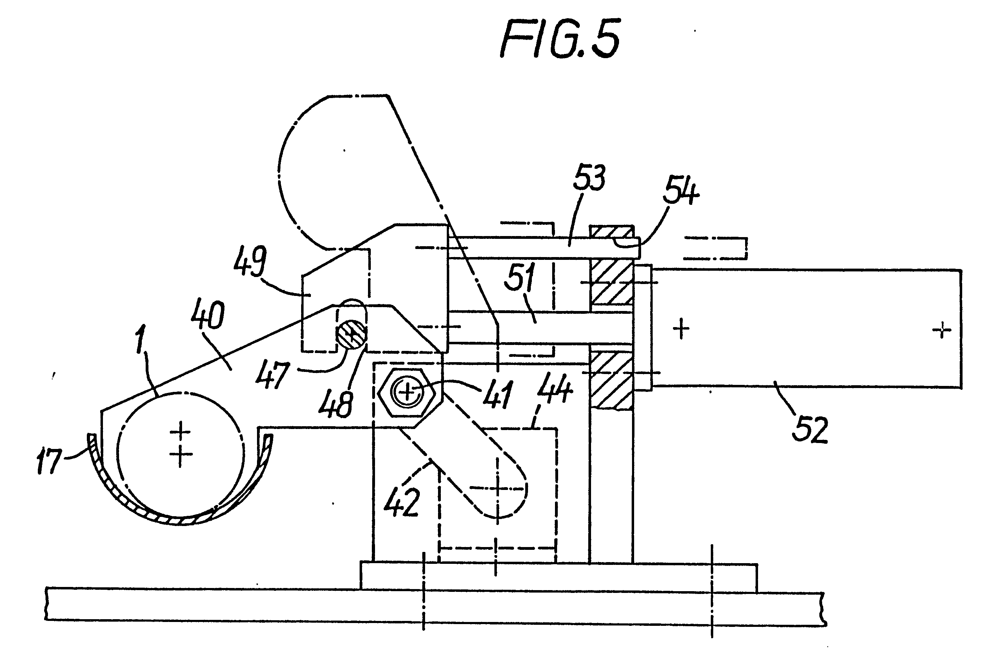

Der Bahnräumer 40 ist über eine runde Stange 41 und eine Traverse 42 mit der Kolbenstange 43 eines Pneumatikzylinders 44 in Richtung der Gleitbahn 15 hin und her bewegbar. Die Stange 41 ist parallel zur Achse der Gleitbahn 15 angeordnet und in zwei Führungen 45, 46 gleitbar und um ihre eigene Achse drehbar gelagert. Der Bahnräumer 40 weist ferner einen Bolzen 47 auf, der in eine Führungsnut 48 einer Kulisse 49 eingreift. Die Kulisse 49 ist mit der Kolbenstange 51 eines Pneumatikzylinders 52 verbunden, mit dessen Hilfe die Kulisse in einer Ebene quer zur Gleitbahn 15 bewegbar ist. Zur besseren Führung ist die Kulisse außerdem noch mit einer Führungsstange 53 verbunden, die in einer Führung 54 gleitbar gelagert ist. Bei herausgefahrener Kolbenstange 51 füllt das freie Ende des Bahnräumers 40 den Querschnitt des Gleitbahnstücks 17 aus, während das freie Ende des Bahnräumers 40 bei eingezogener Kolbenstange 51 aus dem Bereich des Gleitbahnstücks 17 herausgeschwenkt ist (strichpunktierte Darstellung in Fig. 5).

Das Klemmwerkzeug 34 ist als doppelarmiger Hebel 55 ausgebildet, der um eine waagerechte, parallel zur Gleitbahn 15 angeordnete Achse 56 schwenkbar gelagert ist. An seinem einen Ende weist der Hebel 55 eine Klemmbacke 35 auf, an seinem anderen Ende ist der Hebel an die Kolbenstange 56 eines mit einer Druckfeder 58 versehenen Pneumatikzylinders 59 angelenkt. Der der Druckfeder 58 abgewandte Anschluß des Pneumatikzylinders 59 ist über ein als 3/2-Wegeventil ausgebildetes Abschaltventil 60 an eine Druckleitung P angeschlossen, die wiederum über ein als 2/2-Wegeventil ausgebildetes Abschaltventil 61 mit einem Überdruckventil 62 verbunden ist. Wenn das Abschaltventil 60 in seiner Sperrstellung steht, ist der Pneumatikzylinder 59 drucklos und die Druckfeder 58 drückt den Kolben nach unten, so daß der Hebel 55 entgegen dem Uhrzeigersinn herumgeschwenkt wird. In dieser Stellung des Hebels 55 ist die Klemmbacke 35 aus dem Bereich der Gleitbahn 15 herausgeschwenkt. Wenn das Ventil 60 in die in Fig. 6 dargestellte Durchlaßstellung geschaltet ist, wird der Kolben des Pneumatikzylinders 59 entgegen der Druckkraft der Druckfeder 58 beaufschlagt und schwenkt das Klemmwerkzeug 34 im Uhrzeigersinn in die Gleitbahn 15. Wenn das Abschaltventil 61 die in Fig. 6 dargestellte Durchlaßstellung einnimmt, erhält der Pneumatikzylinder 59 den im Druckbegrenzungsventil 62 eingestellten verminderten Druck $p_r$, der ausreicht, um den Sondenkopf 1 mit dem Klemmwerkzeug 34 in das Gleitbahnstück 17 zu schwenken und einen dort befindlichen Probenkopf 1 festzuhalten. Wenn das Abschaltventil 61 die Sperrstellung einnimmt, wird der Kolben im Zylinder 59 mit dem in der Druckleitung P herrschenden Druck $p_0$ beaufschlagt. Mit diesem Druck ist es möglich, die Klemmbacken 35 mit erhöhtem Druck gegen den Probenkopf 1 zu drücken. Statt des Pneumatikzylinders 59 kann auch ein doppeltwirkender Zylinder ohne Feder vorgesehen sein.

Das Trennwerkzeug 33 ist in Form einer Kreissäge ausgebildet, die an einem um eine waagerechte Achse 65 schwenkbar angeordneten Hebel 66 gelagert ist. Der Hebel 66 ist an seinem freien Ende an die Kolbenstange 67 eines mit einer Druckfeder 68 ausgestatteten Pneumatikzylinders 69 angelenkt. Die Druckfeder 68 beaufschlagt den Hebel 66 entgegen dem Uhrzeigersinn und hält somit das Trennwerkzeug 33 aus dem Bereich der Gleitbahn 15 heraus. Die Rückführung des Trennwerkzeuges 33 in die Ruhelage kann statt durch die Druckfeder 68 auch mittels eines über eine Seilrolle geführten Seiles mit einem Gegengewicht erfolgen. Die der Druckfeder 68 abgewandte Zylinderkammer des Pneumatikzylinders 69 ist über ein als 3/2-Wegeventil ausgebildetes Abschaltventil 71 mit der Druckleitung P verbunden.

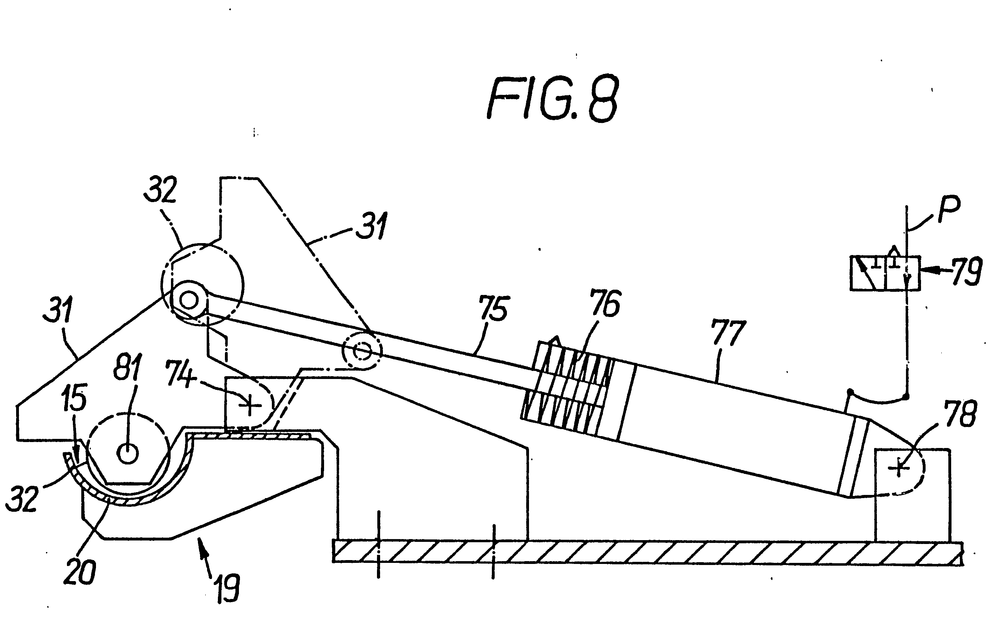

Der den Anschlag 32 haltende Hebel 31 ist über die Kolbenstange 75 eines mit einer Druckfeder 76 versehenen Pneumatikzylinders 77 verbunden, der an einer Achse 78 ortsfest angelenkt ist. Der der Achse 78 benachbarte Anschluß des Zylinders 77 ist über ein als 3/2-Wegeventil ausgebildetes Abschaltventil 79 mit der Druckleitung P verbunden. Die Druckfeder 76 im Zylinder 77 übt auf den Kolben eine Kraft in Richtung auf die feste Achse 78 aus und zieht den Hebel 31 über die Kolbenstange 75 im Uhrzeigersinn in die in Fig. 8 strichpunktiert dargestellte Lage, in der der Anschlag 32 aus dem Bereich der Gleitbahn 15 herausgeschwenkt ist. Durch das Umschalten des Abschaltventils 79 in die gezeichnete Durchflußstellung wird die der Achse 78 benachbarte Zylinderkammer mit Druckluft beaufschlagt und drückt den Kolben entgegen der Kraft der Feder 76 derart, daß der Hebel 31 entgegen dem Uhrzeigersinn verschwenkt wird und der Anschlag 32 in die Gleitfläche 20 des Auswerfers 19 hineingedrückt wird. Zu seiner axialen Verstellung weist der Anschlag 32 einen Bolzen 81 auf, der in dem Hebel 31 gehalten wird, wobei die axiale Verstellung durch eine gemeinsame Gewindepaarung 82 herbeigeführt werden kann.

Der Auswerfer 19 ist als doppelarmiger Hebel 84 ausgebildet, der um eine parallel zur Gleitbahn 15 angeordnete Achse 85 schwenkbar ist und dessen der Gleitfläche 20 abgewandtes Ende gelenkig mit der Kolbenstange 86 eines an einer fest angeordneten Achse 87 angelenkten Pneumatikzylinders 88 verbunden ist. Die dem Auswerfer 19 zugewandte Zylinderkammer enthält eine Druckfeder 89. Die von dem Hebel 84 abgewandte Zylinderkammer des Zylinders 88 ist über ein als 3/2-Wegeventil ausgebildetes Abschaltventil 90 mit der Druckleitung P verbunden. Die Druckfeder 89 wirkt auf den Kolben des Zylinders derart, daß der Auswerfer 19 im Uhrzeigersinn in seiner oberen Lage gehalten wird, in der sich die Gleitfläche 20 in der Höhe der Gleitbahn 15 befindet. Zur Begrenzung der oberen Lage des Auswerfers 19 ist ein Bolzen 92 vorgesehen, der axial in einem fest angeordneten Gewindeteil 93 verstellbar ist. Wenn das Abschaltventil 90 in die Durchlaßstellung geschaltet wird, wird die dem Auswerfer 19 abgewandte Zylinderkammer des Zylinders 88 mit Druck beaufschlagt und der Auswerfer entgegen der Druckkraft der Druckfeder 89 in eine untere, seitlich von der Gleitbahn 15 gelegene Stellung abgeschwenkt.

In Abwandlung des beschriebenen Pneumatikzylinders 59, 69, 77 und 88 mit Druckfeder können auch hier Zylinder mit zwei gesteuerten Anschlüssen verwendet werden.

Unter dem Auswerfer 19 befindet sich eine Transportbahn 100 mit einem auf Schienen 101 fahrbaren Transportwagen 102. Die Transportbahn 100 reicht durch die Wand 103 des Laborraums 104 bis in diesen hinein. Zum Schutz des Laborraums 104, in dem im allgemeinen saubere Luftverhältnisse erforderlich sind, gegen Staub und Probenschmutz ist die Transportbahn 100 im Bereich des Laborraums 104 in einem geschlossenen Tunnel 105 mit einem Deckel bzw. einer Klappe 106 untergebracht. Der Transportwagen 102 läuft mit Rollen 107 in den Schienen 101 und wird durch einen Kettentrieb 108 aus dem Bereich des Auswerfers 19 bis unter die Klappe 106 des Tunnels 105 in dem Laborraum 104 und wieder zurück transportiert. Der Transportwagen 102 besitzt ein offenes kastenförmiges Oberteil 109, das durch einen Pneumatikzylinder 110 gekippt werden kann.

Im Bereich unter dem Auswerfer 19 ist außerdem neben der Transportbahn ein mit Wasser gefüllter Container 111 aufgestellt.

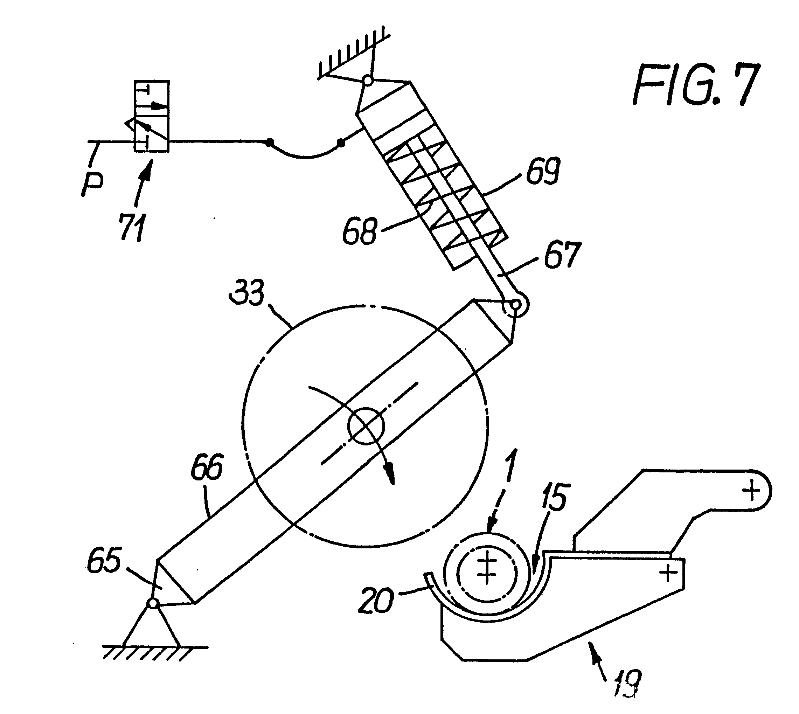

Die Empfangsstation arbeitet folgendermaßen. Der Probenkopf 1 kommt mit dem offenen Ende des Papprohres 2 in die Gleitbahn 15 der Empfangsstation hinein und trifft auf die Blende 23, über die er durch den Dämpfungszylinder 25 abgebremst wird. Während dieses Vorgangs sind der Bahnräumer 40, das Klemmwerkzeug 34, das Trennwerkzeug 33 und der Anschlag 32 aus dem Bereich der Gleitbahn 15 herausgeschwenkt. Der Auswerfer 19 befindet sich mit seiner Gleitfläche 20 in Höhe der Gleitbahn 15. Nach dem Einlaufen des Probenkopfes 1 wird das Ventil 79 in die in Fig. 8 dargestellte Durchflußstellung geschaltet, so daß der Zylinder 77 mit Druck beaufschlagt wird und der Anschlag 32 in den Bereich der Gleitbahn 15 bzw. den Bereich der Gleitfläche 20 hinein geschwenkt wird. Anschließend wird der Pneumatikzylinder 29 betätigt und die Kolbenstange 30 drückt auf den Stecker 12, bis der Probenkopf mit seiner Außenseite 8 gegen den Anschlag 32 kommt. Danach werden die Ventile 60 und 61 (Fig. 6) in die Durchflußstellung geschaltet. Der Zylinder 59 erhält so einen vom Druckbegrenzungsventil 62 bestimmten reduzierten Druck $p_r$ und drückt das Klemmwerkzeug 34 mit der Klemmbacke 35 mit begrenzter Kraft auf den Probenkopf 1, der so für den anschließenden Trennvorgang gehalten wird. Zum Trennen wird das Ventil 71 (Fig. 7) in die Durchflußstellung geschaltet, wodurch der Zylinder 69 beaufschlagt wird und der Hebel 66 mit dem Trennwerkzeug 33 gegen den Probenkopf 1 bewegt wird.

Der Anschlag 32 kann zuvor axial derart eingestellt werden, daß seine Anschlagfläche und die dem Anschlag 32 abgewandte Fläche des Trennwerkzeuges 33 einen vorgegebenen Abstand a haben. Bei dieser Einstellung wird der Probenkopf 1 genau am Hals 10 des Probenmaterials durchtrennt. Nach dem Durchtrennen des Probenkopfes 1 wird das Ventil 71 wieder in die in Fig. 7 dargestellte Sperrstellung geschaltet, so daß die Zylinderkammer drucklos wird und die Druckfeder 68 das Trennwerkzeug 33 aus dem Bereich des Probenkopfes und damit aus der Gleitbahn 15 herausschwenkt.

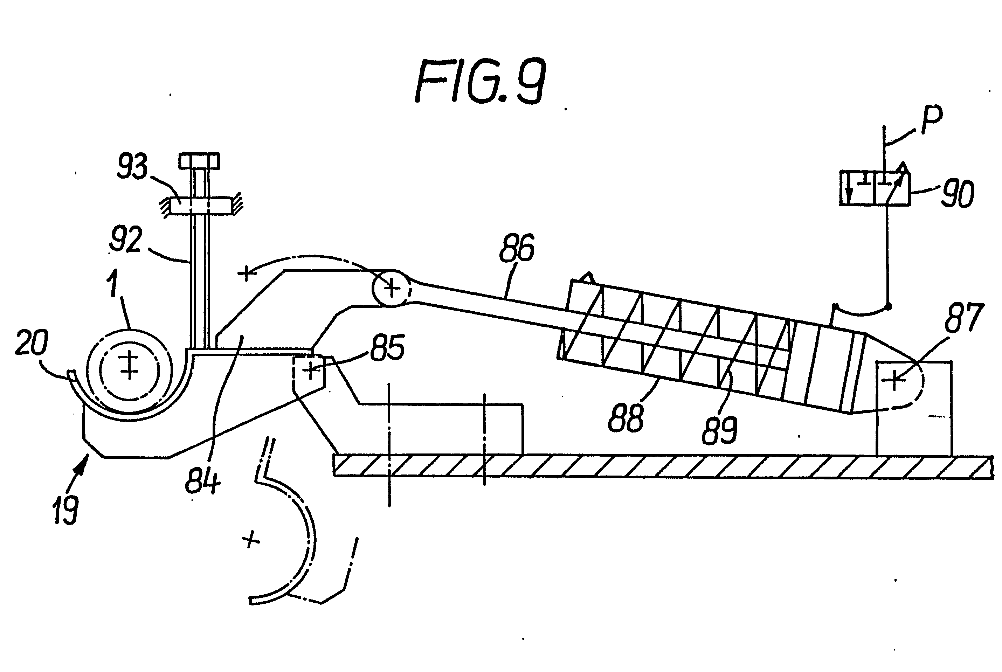

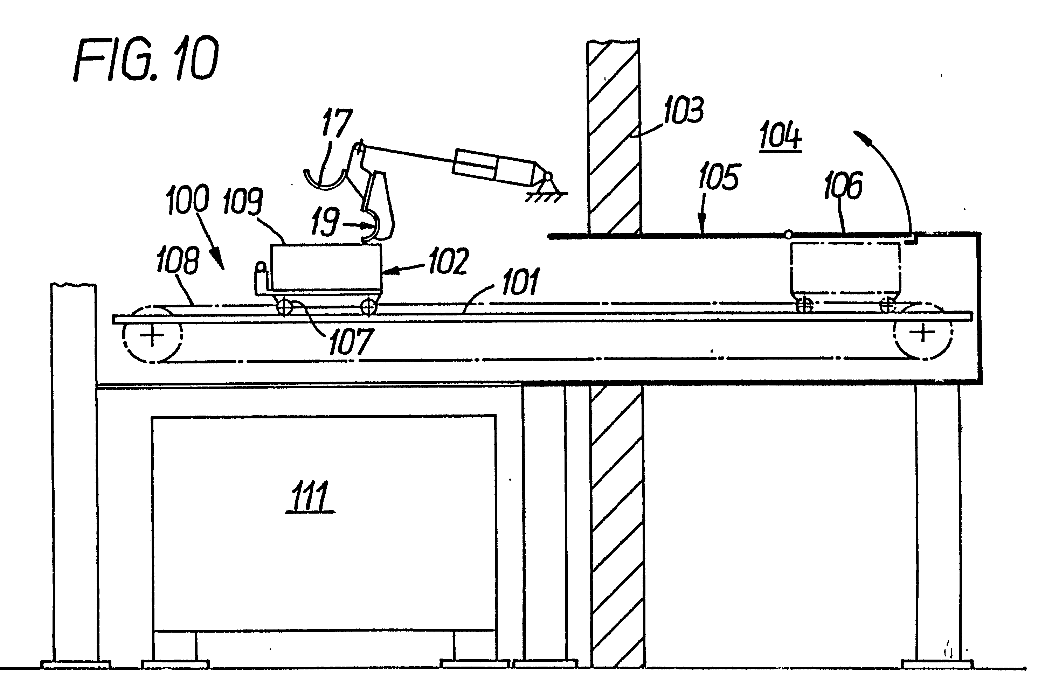

Das abgetrennte Teil des Probenkopfes 1 liegt lose auf der Gleitfläche 20 des Auswerfers 19. Durch Schaltung des Ventils 90 in die Durchflußstellung wird der Zylinder 88 mit Druckluft beaufschlagt und der Auswerfer 19 in die untere Stellung geschwenkt (vgl. Fig. 10 und strichpunktierte Darstellung in Fig. 9), in der das abgetrennte Teil in den Transportwagen 102 fällt. Das Oberteil 109 des Transportwagens 102 wird mit Hilfe des Zylinders 110 geschwenkt, so daß das abgetrennte Teil in den darunter befindlichen, mit Wasser gefüllten Abfallcontainer 111 fällt, in dem das gegebenenfalls brennende Papprohr 2 der noch heißen Probe gelöscht wird. Anschließend wird der Auswerfer 19 wieder in seine obere Stellung gebracht, in der die Gleitfläche 20 die gleiche Höhe wie die übrige Gleitbahn 15 einnimmt. Der Kasten bzw. das Oberteil 109 wird zur Aufnahme weiteren Materials ebenfalls wieder hochgeschwenkt.

Im folgenden wird das Abschaltventil 61 (Fig. 6) in die Sperrstellung gebracht, so daß der Pneumatikzylinder 59 mit dem vollen Druck $p_0$ der Druckleitung P beaufschlagt wird. Durch diesen erhöhten Druck bewirkt die Klemmbacke 35, daß in dem Papprohr 2 der Keramikkörper 3 in einzelne Stücke zerdrückt wird. Hiernach werden das Klemmwerkzeug 34 durch Umschalten des Abschaltventils 61 in die Durchlaßstellung auf die sich aus dem reduzierten Druck $p_r$ ergebende Haltekraft eingestellt und die Probe einschließlich der Keramikteile mittels der Kolbenstange 30 aus dem Papprohr 2 herausgedrückt. Erst dann werden das Klemmwerkzeug 34 durch Umschalten des Ventils 60 in die Sperrstellung wieder aus dem Bereich der Gleitbahn 15 herausgeschwenkt und Einzelteile des Probenkopfes 1 mittels des Bahnräumers 40 auf die Gleitfläche 20 des Auswerfers 19 geschoben.

Der Auswerfer 19 wird erneut nach unten ausgeschwenkt, so daß die Probe 9 und die zerkleinerten Einzelteile des Probenkopfes 1 in den Transportwagen 102 fallen. Der Transportwagen 102 wird mit Hilfe des Kettentriebes 108 in den Tunnel 105 hineingefahren. Nach dem Öffnen der Klappe 106 kann die eigentliche Probe 9 aus dem Transportwagen 102 zu entsprechenden Laboruntersuchungen herausgenommen werden. Nach Schließen der Klappe 106 wird der Transportwagen 102 wieder in den Bereich unter dem Auswerfer 19 zurückgefahren und die dort verbliebenen Einzelteile der Probe werden in den Container 111 gekippt.

**Patentansprüche**

1. Empfangsstation einer ein Transportrohr (18) aufweisenden Transportanlage für Probenköpfe mit in einem Labor zu untersuchendem Material aus einem metallurgischen Prozeßgefäß, dadurch gekennzeichnet, daß sich an das Transportrohr (18) eine Gleitbahn (15) mit, in Transportrichtung nacheinander angeordnet, einem Auswerfer (19) für das Auswerfen und einem gegen die Gleitbahn drückbaren Klemmwerkzeug (34) mit mindestens zwei Kraftstufen für das Festhalten bzw. Zerdrücken von Teilen der die Probe enthaltenden Sonde sowie mit einem zwischen Auswerfer (19) und Klemmwerkzeug liegenden Trennwerkzeug (33) zum Abtrennen von Sondenteilen, einem Begrenzungsteil (23) am Ende der Gleitbahn (15) und einer das Begrenzungsteil durchsetzenden Kolbenstange (30) zum Ausschieben von Teilen aus der Sonde anschließt und daß dem Auswerfer (19) eine bis in den Laborraum (104) hineinreichende und von diesem durch eine Wandung (105) abgeschirmte Transporteinrichtung (101, 102) zugeordnet ist.

2. Empfangsstation nach Anspruch 1, dadurch gekennzeichnet, daß das Begrenzungsteil (23) nachgiebig gelagert ist und mit einem Feder- und/oder einem Dämpfungselement (27 bzw. 25, 26) verbunden ist.

3. Empfangsstation nach Anspruch 1 oder 2, dadurch gekennzeichnet, daß im Bereich des Auswerfers (19) ein in die Gleitbahn (15) schwenkbarer Anschlag (32) und im Bereich des Begrenzungsteils (23) ein in Richtung auf den Anschlag (32) wirkender Zylinder (29) angeordnet ist.

4. Empfangsstation nach Anspruch 3, dadurch gekennzeichnet, daß das Trennwerkzeug (33) zwischen dem Anschlag (32) und dem Klemmwerkzeug (34) angeordnet und in den Bereich der Gleitbahn (15) schwenkbar ist.

5. Empfangsstation nach einem der vorhergehenden Ansprüche, dadurch gekennzeichnet, daß in Transportrichtung an das Klemmwerkzeug (34) anschließend ein in den Bereich der Gleitbahn (15) einschwenkbarer Bahnräumer (40) zum Verschieben von im Klemmwerkzeug (34) entstandenen Sondenbruchstücken zum Auswerfer (19) hin vorgesehen ist.

6. Empfangsstation nach Anspruch 5, dadurch gekennzeichnet, daß das Klemmwerkzeug (34) durch einen über ein Abschaltventil (61) mit einem Druckbegrenzungsventil (62) verbundenen Zylinder (59) in den Bereich der Gleitbahn (15) bewegbar, vorzugsweise schwenkbar ist.

7. Empfangsstation nach einem der Ansprüche 1 bis 6, dadurch gekennzeichnet, daß die Wandung (105) der Transporteinrichtung (101, 102) in Form eines gegenüber dem Laborraum (104) allseitig verschlossenen Tunnels mit einem verschließbaren Zugang (106) ausgebildet ist.

## Claims

1. A receiving station of a conveying installation having a conveying tube (18) for sample heads with material from a metallurgical process vessel to be investigated in a laboratory, characterized in that the conveying tube (18) is adjoined by a slideway (15) having, disposed in succession in the conveying direction: an ejector (19) for ejection; a clamping tool (34) which can be forced against the slideway and has at least two stages of force for respectively retaining and crushing portions of the probe containing the sample; a parting tool (33), disposed between the ejector (19) and the clamping tool, for separating parts of the probe; a boundary member (23) at the end of the slideway (15); and a piston rod (30), which extends through the boundary member, for pushing out portions of the probe, and associated with the ejector (19) is a conveying device (101, 102) which extends into the laboratory space (104) and is screened therefrom by a wall (105).

2. A receiving station according to claim 1, characterized in that the boundary member (23) is yieldably mounted and connected to a spring and/or a damping element (27; 25, 26).

3. A receiving station according to claims 1 or 2, characterized in that a stop (32) which can be pivoted into the slideway (15) is disposed in the zone of the ejector (19), and a cylinder (29) acting in the direction of the stop (32) is disposed in the zone of the boundary member (23).

4. A receiving station according to claim 3, characterized in that the parting tool (23) is disposed between the stop (32) and the clamping tool (34) and can be pivoted into the zone of the slideway (15).

5. A receiving station according to any of the preceding claims, characterized in that adjoining the clamping tool (34) in the conveying direction is a slideway clearer (40) which can be pivoted into the zone of the slideway (15) to move probe fragments occurring in the clamping tube (34) in the direction of the ejector (19).

6. A receiving station according to claim 5, characterized in that the clamping tool (34) can be moved, preferably pivoted into the zone of the slideway (15) by a cylinder (59) connected via a shut-off valve (61) to a pressure limiting valve (62).

7. A receiving station according to any of claims 1 to 6, characterized in that the wall (105) of the conveying device (101, 102) takes the form of a tunnel which has a closable access (106) and is closed on all sides in relation to the laboratory space (104).

## Revendications

1. Station de réception d'une installation de transport comportant un tube de transport (18) pour des têtes d'échantillonnage constituées d'un matériau à analyser dans un laboratoire, provenant d'une cuve de process métallurgique, caractérisée en ce que se raccordent au tube de transport (18) une glissière (15), comportant, disposés les uns à la suite des autres dans le sens du transport, un extracteur (19) pour extraire, un outil de blocage (34) pouvant s'appuyer contre la glissière, avec au moins deux niveaux de force d'appui pour maintenir et pour écraser les parties de la sonde contenant l'échantillon, ainsi qu'un outil de coupe (33), placé entre l'extracteur (19) et l'outil de blocage (34), pour partager les parties de la sonde, un organe d'arrêt (23) à l'extrémité de la glissière (15) et une tige de piston (30) traversant l'organe d'arrêt pour retirer de la sonde les morceaux, et en ce qu'à l'extracteur (19) est adjointe une installation de transport (101, 102) arrivant jusque dans l'enceinte du laboratoire (104) et qui, à partir de celle-ci, est recouverte au moyen d'un capotage (105).

2. Station de réception suivant la revendication 1, caractérisée en ce que l'organe d'arrêt (23) est monté souple et est relié avec un élément formant ressort et/ou amortisseur (27, et/ou 25, 26).

3. Station de réception suivant la revendication 1 ou la revendication 2, caractérisée en ce que, dans la zone de l'extracteur (19), est disposée une butée (32) pouvant basculer dans la glissière (15) et en ce que, dans la zone de l'organe d'arrêt (23), est disposé un cylindre (29) agissant dans la direction de la butée (32).

4. Station de réception suivant la revendication 3, caractérisée en ce que l'outil de coupe (33) est disposé entre la butée (32) et l'outil de blocage (34) et peut basculer dans la zone de la glissière (15).

5. Station de réception suivant l'une quelconque des revendications précédentes, caractérisée en ce que, dans le sens du transport, directement après l'outil de blocage (34), est prévu un nettoyeur de glissière (40), susceptible de basculer dans la zone de la glissière (15), pour pousser vers l'extracteur (19) les morceaux de la sonde brisés provenant de l'outil de blocage (34).

6. Station de réception suivant la revendication 5, caractérisée en ce que l'outil de blocage (34) peut être déplacé, ou plus avantageusement basculé, dans la zone de la glissière (15) au moyen d'un cylindre (59) raccordé, par l'intermédiaire d'une soupape de coupure (61), à une soupape de limitation de pression (62).

7. Station de réception suivant l'une quelconque des revendications 1 à 6, caractérisée en ce que le capotage (105) de l'installation de transport (101, 102) est réalisé sous forme d'un tunnel clos sur tous les côtés par rapport à l'enceinte du laboratoire (104) et comportant un accès (106) pouvant être fermé.

# FIG.1

FIG. 2

EP 0 120 356 B1

FIG. 3

EP 0 120 356 B1

# FIG.4

FIG.5

# FIG. 6

FIG.7

FIG.8

FIG.9

P

90

87

86

89

88

85

84

93

92

1

19

20

17

# FIG. 10

EP 0 120 356 B1